# EUROPEAN PATENT SPECIFICATION

(11) **EP 2 589 890 B1**
(45) Date of publication and mention of the grant of the patent: **10.04.2019**
(21) Application number: 11008774.9
(22) Date of filing: 03.11.2011
(51) Int. Cl.: F24F 11/30

(54) **A unit for a system**
Einheit für ein System
Unité pour système

(43) Date of publication of application: 08.05.2013
(73) Proprietor: Danfoss A/S, 6430 Nordborg (DK)
(72) Inventor: Guld, Henning, 8700 Horsens (DK); Munch, Lars, 6580 Vamdrup (DK)
(74) Representative: Keil & Schaafhausen Patent- und Rechtsanwälte PartGmbB

(56) References cited:
- EP-A1- 2 272 143
- DE-A1-102004 051 928
- DE-A1-102005 016 082
- US-A1- 2010 101 854

## Description

The invention relates to a unit comprising a socket forming a first part, a second part mountable on the socket, a frame between the socket and the second part, said frame having an opening surrounding a connection section of the two parts, wherein said opening is larger than said connecting section and said second part comprises a collar being larger than said opening.

The invention is illustrated in connection with a unit used as a control unit for a system, in particular a heating or cooling system or any other system influencing conditions of the environment, like a ventilation system, a humidification system, a shading system against sunlight, and so on.

A unit of the above mentioned type is known from EP 2 272 143 A1, said document thereby discloses a unit according to the preamble of claim 1. An electrical installation equipment is flush-mounted in a wall and afterwards covered by an aesthetic frame. In order to fix the aesthetic frame to the electrical installation equipment a mounting frame is placed in an opening of the aesthetic frame and engages a protruding rim of the electrical installation equipment. At the same time the mounting frame abuts against the aesthetic frame and thereby fixes the aesthetic frame on the wall to cover the electrical installation equipment.

US 2010/101854 A1 shows a flush wall mount thermostat and in-set mounting plate for a heating, ventilation or air conditioning system. The mounting system comprises a housing for receiving electrical components with a front panel and a back panel coupled to each other. A mounting plate is connectable to said front and back plates by a flange of said housing that may be receive in a recess of the mounting plate.

DE 10 2005 016082 A1 discloses an apparatus, e. g. a light switch, that may be mounted in a wall. A frame comprises protrusions that may engage recesses of the socket. Furthermore a plate, e.g. a switch button, may engage the socket using holding ribs.

DE 10 2004 051928 A1 shows a housing with fixing elements. The housing may be inserted into an opening of a mounting plate. The fixing elements comprise feather elements that may engage an edge of the mounting plate once the housing has been inserted into the opening. Between the housing and the mounting plate an elastic sealing may be arranged.

In some heating or cooling systems the first part is formed as a socket which is fixedly mounted in a wall of a room. Such a socket comprises functional parts which cannot be influenced by a user, like sensors, electrical connections, remote control switches and the like. The second part is mountable on the socket and comprises the "intelligent" part of the unit, e.g. elements which are used for setting and displaying parameters and the like. In order to cover the socket and to give a better aesthetic appearance the frame is provided. Before mounting the second part on the socket the frame is arranged on the socket. The second part is inserted into the opening of the frame and then the second part is mounted on the socket.

The task underlying the invention is to make it possible to use the unit in different environments.

This task is solved in that a compressible material is arranged between said collar and said frame, said compressible material being pressed against said frame by means of said collar, wherein said first part and said second part are connected by means of a catch mechanism, said catch mechanism having at least two locking positions, a distance between two adjacent positions being smaller than a thickness of the compressible material in an uncompressed state.

Such a unit can be used with different frames. The only condition is that each of the frames has an opening which is larger than the connecting section between the first part and the second part. Since the second part comprises a collar which is larger than said opening the opening is not visible although this opening is not completely filled by the connecting section of the two parts. The frame is held by the collar by friction. This has the additional advantage that the collar can be aligned with the second part even after mounting of the second part on the first part. Furthermore a compressible material is arranged between said collar and said frame, said compressible material being pressed against said frame by means of said collar. Said compressible material can be rubber or an elastic plastic material. It is compressed when the second part is mounted on the socket thus generating a friction force holding the frame between the socket or the wall in which the socket is built in and the second part. Thus the compressible material defines a position of the frame relative to the wall or to the socket. Also said first part and said second part are connected by means of a catch mechanism, said catch mechanism having at least two locking positions, a distance between two adjacent locking positions being smaller than a thickness of the compressible material in an uncompressed state. This embodiment has the advantage to ensure that the compressible material is in any case sufficiently compressed when the second part is mounted on the first part. When the compressible material is not compressed enough in a first locking position the second part is pushed further to reach a second locking position. Since a distance between the two locking positions is smaller than a thickness of the compressible material in an uncompressed state, this further movement causes a sufficient compression of the compressible material.

Preferably said collar is pressed against said compressible material with a force generating a friction force between said frame and said collar, said friction force being greater than twice of the force created by the weight of the frame. This is a simple method to make sure that the frame keeps its position once the second part is mounted on the socket.

Preferably said compressible material is in the form of a ring, said ring following the form of the opening. When the compressible material is in the form of a ring it can be easily handled during mounting. After mounting it is not longer necessary to keep the material in the form a ring. Therefore it is possible to use a sequence of sections of the compressible material which are held together in the form of a ring before mounting. One possibility is to hold the compressible material together with the frame at a position near the socket and to insert the second part into the opening of the frame and fix the second part to the socket. When the first part or socket has a protrusion which is inserted into the opening of the frame then the frame together with the ring of compressible material is guided over the protrusion and the second part is mounted thereafter. In this way it is possible to use different frames, even from a number of different manufacturers.

Preferably said second part has display and/or operating means in an area on a side parallel to said opening, said area being larger than said opening. Since the second part has already a collar which is larger than the opening in the frame this collar can be used to enlarge the operating area of the second part thus making operation of the unit easier. The larger display and/or operating means are the easier it is for an user to input settings into the unit or to read information from the display.

Preferably said display means comprise a touch screen. The touch screen can be made large enough to input the necessary settings with a finger of an user and to display at the same time the reaction of these settings.

A preferred example of the invention will now be described in more details with reference to the drawing, wherein:
- Fig. 1: is perspective explosive view of a control unit,
- Fig. 2: is a side view of the second part, and
- Fig. 3: is a section through the unit in part.

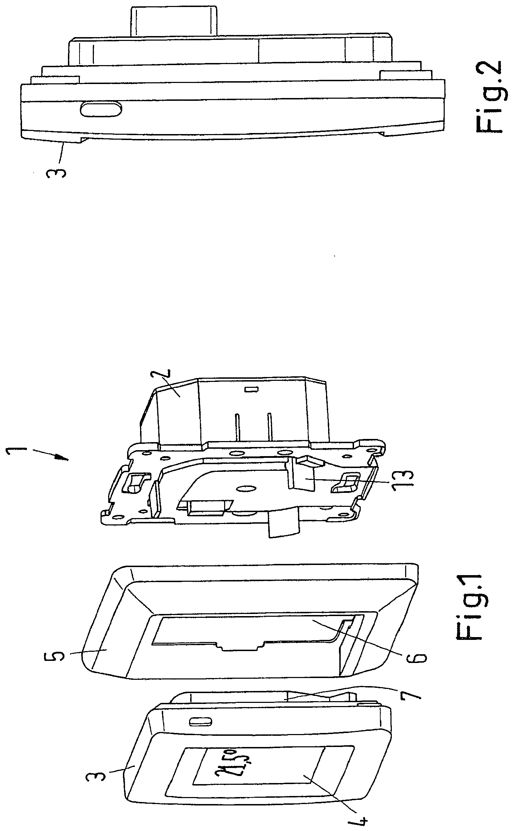

A unit 1 as shown in Fig. 1 is used to set and display parameters in a heating or cooling system. The unit 1 comprises a socket 2 which is also termed as "first part". The socket 2 is designed to be fixedly mounted in a wall of a room or a building. The socket 2 comprises parts like one or more sensors, electrical connections, switches and so on. These parts should not directly be actuated by a person.

Furthermore, the unit 2 comprises a second part 3. The second part 3 comprises display and/or operating means 4 in the form of a touch screen and/or buttons, switches, LEDs or the like.

A frame 5 is provided to be mounted between the socket 2 and the second part 3. This frame 5 comprises an opening 6. This opening 6 is larger than a connecting part 7 of the second part 3. This connecting part 7 is used to connect the second part 3 and the socket 2. To this end the connecting part 7 is inserted through the opening 6. The second part together with the frame 5 can then be mounted on the socket 2. Another possibility is to first position the frame on the socket 2 (or a wall in which the socket 2 is mounted) and to mount the second part 3 thereafter.

Fig. 2 shows the unit 1 in a mounted state. However, the socket 2 is not built in a wall.

Since the opening 6 of the frame 5 is larger than the connecting part of the second part 3 a unit 1 can be used with a lot of different frames 5 thus making it possible to adapt the unit optically to different surroundings.

Since there is no positive locking connection between the frame 5 and the connecting part 7 of the second part 3 other means for holding the frame 5 in position are provided.

The second part 3 comprises a collar 8 which is larger than the opening 6 of the frame 5. Therefore, the collar 8 covers more than the opening 6 of the frame 5.

A compressible material 9 is arranged between the second part 3 and the frame 5, more precisely between the collar 8 and the frame 5. When the second part 3 is mounted on the socket 2 the compressible material 9 is pressed against the frame 5 by means of the collar 8 with a force generating a friction force between the frame 5 and the collar 8. The friction force is greater than twice of the force created by the weight of the frame 5. This is sufficient to hold the frame 5 in position even if the frame is mounted moveable in vertical direction, as shown in Fig. 2. However, it is possible to adjust the position of the frame 5 even after mounting.

The compressible material 9 is in the form of a ring, wherein the ring 9 follows the form of the opening 6. Therefore, it can be made sure that the compressible material 9 is always in contact with an inner edge 10 of the frame 5 surrounding the opening 6.

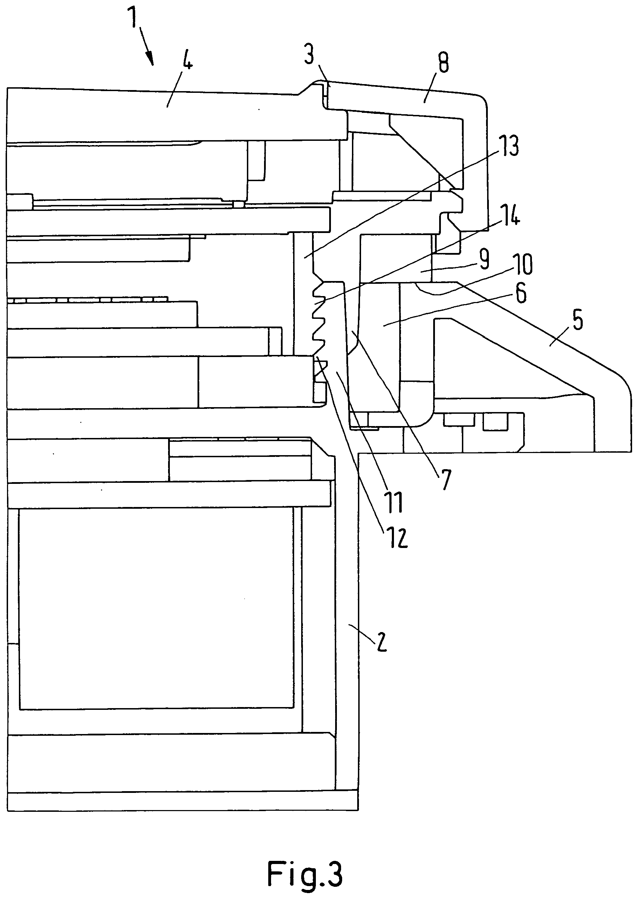

As can be seen in Fig. 3 the socket 2 comprises a first member 11 of a catch mechanism, said first member 11 having a number of teeth 12. The second part 3 comprises a second member 13 of the catch mechanism, wherein said second member 13 comprises a number of teeth 14. The pitch of the teeth 12, 14 is the same. At least one of the members 11, 13 can be elastically formed so that at least one tooth 14 of the second number 13 of the second part 3 catches behind a tooth 12 of the first member 11 of the catch mechanism.

The two members 11, 13 together define at least two locking positions, the distance between two adjacent locking positions being defined by the distance of the tips of the teeth 12, 14. The distance between two adjacent locking positions is smaller than a thickness of the compressible material 9 in an uncompressed state. This has the effect that a second part 3 can be pushed onto the socket 2 until the compressible material 9 rests against the collar 8 and against the frame 5 without being compressed or just slightly being compressed. In order to achieve a sufficient compression of the compressible material 9 the second part 3 is moved one locking position further. Since the distance between two adjacent locking positions is smaller than a thickness of the compressible material in an uncompressed state this leads to the fact that the compressible material 9 is sufficiently compressed but not compressed too strong. Therefore, mounting errors can hardly occur.

Since the collar 8 has to be larger than the opening 6 the display and/or operating means can be made larger as well. In an embodiment not shown in the drawing the display and/or operating means can be made even larger than the opening 6.

## Claims

1. A unit (1) comprising a socket (2) forming a first part, a second part (3) mountable on the socket (2), a frame (5) between the socket (2) and the second part (3), said frame (5) having an opening (6) surrounding a connecting section (7) of the two parts (2, 3), wherein said opening (6) is larger than said connecting section (7), said first part (2) and said second part (3) are connected by means of a catch mechanism (11-14), said catch mechanism (7) having at least two locking positions, **characterized in that** said second part (3) comprises a collar (8) being larger than said opening (6), wherein a compressible material (9) is arranged between said collar (8) and said frame (5), said compressible material (9) being pressed against said frame (5) by means of said collar (8), a distance between two adjacent locking positions being smaller than a thickness of the compressible material (9) in an uncompressed state.

2. The unit according to claim 1, **characterized in that** said collar (8) is pressed against said compressible material (9) with a force generating a friction force between said frame (5) and said collar (8), said friction force being greater than twice of the force created by the weight of the frame(5).

3. The unit according to claim 1 or 2, **characterized in that** said compressible material (9) is in the form of a ring, said ring following the form of the opening (6).

4. The unit according to any of claims 1 to 3, **characterized in that** said second part (3) comprises display and/or operating means (4) in an area on a side parallel to said opening (6), said area being larger than said opening (6).

5. The unit according to claim 4, **characterized in that** said display and/or operating means (4) comprise a touch screen.

## Patentansprüche

1. Einheit (1), umfassend eine Anschlussbuchse (2), die einen ersten Teil bildet, einen zweiten Teil (3), der an der Anschlussbuchse (2) montierbar ist, einen Rahmen (5) zwischen der Anschlussbuchse (2) und dem zweiten Teil (3), wobei der Rahmen (5) eine Öffnung (6) aufweist, die einen Verbindungsabschnitt (7) der zwei Teile (2, 3) umgibt, wobei die Öffnung (6) größer als der Verbindungsabschnitt (7) ist, wobei der erste Teil (2) und der zweite Teil (3) mittels eines Klinkenmechanismus (11-14) verbunden sind, wobei der Klinkenmechanismus (7) mindestens zwei Arretierpositionen aufweist, **dadurch gekennzeichnet, dass** der zweite Teil (3) einen Bund (8) aufweist, der größer als die Öffnung (6) ist, wobei ein zusammendrückbares Material (9) zwischen dem Bund (8) und dem Rahmen (5) angeordnet ist, wobei das zusammendrückbare Material (9) mittels des Bunds (8) gegen den Rahmen (5) gedrückt wird, wobei ein Abstand zwischen zwei benachbarten Arretierpositionen kleiner als eine Dicke des zusammendrückbaren Materials (9) in einem nichtzusammengedrückten Zustand ist.

2. Einheit nach Anspruch 1, **dadurch gekennzeichnet, dass** der Bund (8) mit einer Kraft gegen das zusammendrückbare Material (9) gedrückt wird, die eine Reibungskraft zwischen dem Rahmen (5) und dem Bund (8) erzeugt, wobei die Reibungskraft größer als das Doppelte der durch das Gewicht des Rahmens (5) erzeugten Kraft ist.

3. Einheit nach Anspruch 1 oder 2, **dadurch gekennzeichnet, dass** das zusammendrückbare Material (9) die Form eines Rings aufweist, wobei der Ring der Form der Öffnung (6) folgt.

4. Einheit nach einem der Ansprüche 1 bis 3, **dadurch gekennzeichnet, dass** der zweite Teil (3) Anzeige- und/oder Betriebsmittel (4) in einem Bereich auf einer Seite parallel zur Öffnung (6) umfasst, wobei der Bereich größer als die Öffnung (6) ist.

5. Einheit nach Anspruch 4, **dadurch gekennzeichnet, dass** die Anzeige- und/oder Betriebsmittel (4) einen Touchscreen umfassen.

## Revendications

1. Unité (1) comprenant une douille (2) formant une première partie, une deuxième partie (3) pouvant être montée sur la douille (2), un cadre (5) entre la douille (2) et la deuxième partie (3), ledit cadre (5) ayant une ouverture (6) entourant une section de raccordement (7) des deux parties (2, 3), ladite ouverture (6) étant plus large que ladite section de raccordement (7), ladite première partie (2) et ladite deuxième partie (3) étant raccordées au moyen d'un mécanisme de verrouillage (11-14), ledit mécanisme de verrouillage (7) ayant au moins deux positions de verrouillage, **caractérisée en ce que** ladite deuxième partie (3) comprend un collier (8) plus large que ladite ouverture (6), un matériau compressible (9) étant disposé entre ledit collier (8) et ledit cadre (5), ledit matériau compressible (9) étant pressé contre ledit cadre (5) au moyen dudit collier (8), une distance entre deux positions de verrouillage adjacentes étant inférieure à une épaisseur du matériau compressible (9) dans un état non comprimé.

2. Unité selon la revendication 1, **caractérisée en ce que** ledit collier (8) est pressé contre ledit matériau compressible (9) avec une force générant une force de friction entre ledit cadre (5) et ledit collier (8), ladite force de friction étant supérieure à deux fois la force créée par le poids du cadre (5).

3. Unité selon la revendication 1 ou 2, **caractérisée en ce que** ledit matériau compressible (9) se présente sous la forme d'une bague, ladite bague épousant la forme de l'ouverture (6).

4. Unité selon l'une quelconque des revendications 1 à 3, **caractérisée en ce que** ladite deuxième partie (3) comprend des moyens d'affichage et/ou de commande (4) dans une zone sur un côté parallèle à ladite ouverture (6), ladite zone étant plus grande que ladite ouverture (6).

5. Unité selon la revendication 4, **caractérisée en ce que** lesdits moyens d'affichage et/ou de commande (4) comprennent un écran tactile.
